# EUROPEAN PATENT APPLICATION

(11) **EP 4 810 551 A1**
(43) Date of publication of application: **23.09.2026**
(21) Application number: 25164475.3
(22) Date of filing: 18.03.2025
(51) Int. Cl.: C08K 3/22

(54) **POLYAMIDE THERMOPLASTIC COMPOSITIONS HAVING CERAMIC PROPERTIES**

(71) Applicant: SHPP Global Technologies B.V., 4612 PX Bergen op Zoom (NL)
(72) Inventor: Meng, Siqi, Shanghai, 201319 (CN); Dong, Qingqing, Shanghai, 201319 (CN); Du, Yinlong, Shanghai, 201319 (CN); Song, Shijie, Shanghai, 201319 (CN)
(74) Representative: Modiano, Gabriella Diana

(57) **Abstract**

Thermoplastic compositions include (a) from about 20 wt% to about 90 wt% of a polyamide resin; and (b) from about 30 wt% to about 55 wt% of a ceramic filler. The composition has a pencil hardness of "B" or harder as evaluated according to ASTM D3363 using a force of 1 kilogram-force (kgf). The combined weight percent value of all components does not exceed 100 wt%, and all weight percent values are based on the total weight of the composition. In certain aspects the ceramic filler includes aluminum oxide, aluminosilicate, or a combination thereof.

## Description

### FIELD OF THE DISCLOSURE

The present disclosure relates to polyamide thermoplastic compositions, and in particular to polyamide compositions including a ceramic filler that have ceramic properties.

### BACKGROUND OF THE DISCLOSURE

Common classes of materials include glass, metal, ceramic, and polymers (or elastomers). Considering their high hardness, cold-to-the touch feel, and excellent scratch resistance, ceramic materials have been used broadly in the consumer electronics industry for structural and decoration parts such as the back cover of mobile devices, the frame and buttons of wearable electronics, and housings of earphones. Some disadvantages of ceramics as compared to thermoplastic materials are their high cost and complicated manufacturing procedures.

To reduce cost and simplify the manufacturing process, composites of thermoplastics and ceramics are desired. Efforts to develop them have been largely unsuccessful at least in part to the complicated processing requirements for these composites. High loadings of ceramic fillers are needed to achieve a ceramic effect/properties in a thermoplastic system, and the high ceramic filler loading prevents the composite from being formed from conventional thermoplastic compounding processes. In addition, thermoplastic/ceramic composites often have poor ductility because thermoplastic materials become brittle when filled with ceramic fillers. As a result, the composite cracks easily.

These and other shortcomings are addressed by aspects of the present disclosure.

### SUMMARY

Aspects of the disclosure relate to thermoplastic compositions including (a) from about 20 wt% to about 90 wt% of a polyamide resin; and (b) from about 30 wt% to about 55 wt% of a ceramic filler. The composition has a pencil hardness of "B" or harder as evaluated according to ASTM D3363 using a force of 1 kilogram-force (kgf). The combined weight percent value of all components does not exceed 100 wt%, and all weight percent values are based on the total weight of the composition. In certain aspects the ceramic filler includes aluminum oxide, aluminosilicate, or a combination thereof.

### BRIEF DESCRIPTION OF THE FIGURES

In the drawings, which are not necessarily drawn to scale, like numerals may describe similar components in different views. Like numerals having different letter suffixes may represent different instances of similar components. The drawings illustrate generally, by way of example, but not by way of limitation, various aspects discussed in the present document.

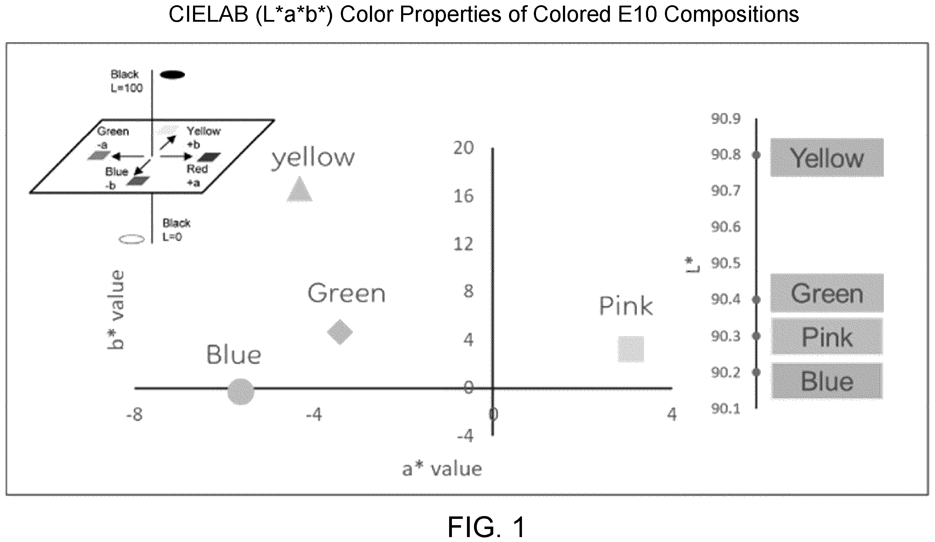

FIG. 1 provides a visual representation of CIELAB (L*a*b*) color properties of colored compositions according to aspects of the disclosure.

### DETAILED DESCRIPTION

Before the present compounds, compositions, articles, systems, devices, and/or methods are disclosed and described, it is to be understood that they are not limited to specific synthetic methods unless otherwise specified, or to particular reagents unless otherwise specified, as such can, of course, vary. It is also to be understood that the terminology used herein is for the purpose of describing particular aspects only and is not intended to be limiting.

Various combinations of elements of this disclosure are encompassed by this disclosure, e.g., combinations of elements from dependent claims that depend upon the same independent claim.

Moreover, it is to be understood that unless otherwise expressly stated, it is in no way intended that any method set forth herein be construed as requiring that its steps be performed in a specific order. Accordingly, where a method claim does not actually recite an order to be followed by its steps or it is not otherwise specifically stated in the claims or descriptions that the steps are to be limited to a specific order, it is in no way intended that an order be inferred, in any respect. This holds for any possible non-express basis for interpretation, including: matters of logic with respect to arrangement of steps or operational flow; plain meaning derived from grammatical organization or punctuation; and the number or type of aspects described in the specification.

All publications mentioned herein are incorporated herein by reference to disclose and describe the methods and/or materials in connection with which the publications are cited.

### Definitions

It is also to be understood that the terminology used herein is for the purpose of describing particular aspects only and is not intended to be limiting. As used in the specification and in the claims, the term "comprising" can include the aspects "consisting of" and "consisting essentially of." Unless defined otherwise, all technical and scientific terms used herein have the same meaning as commonly understood by one of ordinary skill in the art to which this disclosure belongs. In this specification and in the claims which follow, reference will be made to a number of terms which shall be defined herein.

As used in the specification and the appended claims, the singular forms "a," "an" and "the" include plural referents unless the context clearly dictates otherwise. Thus, for example, reference to "a polyamide resin" includes mixtures of two or more polyamide resins.

As used herein, the term "combination" is inclusive of blends, mixtures, alloys, reaction products, and the like.

Ranges can be expressed herein as from one value (first value) to another value (second value). When such a range is expressed, the range includes in some aspects one or both of the first value and the second value. Similarly, when values are expressed as approximations, by use of the antecedent 'about,' it will be understood that the particular value forms another aspect. It will be further understood that the endpoints of each of the ranges are significant both in relation to the other endpoint, and independently of the other endpoint. It is also understood that there are a number of values disclosed herein, and that each value is also herein disclosed as "about" that particular value in addition to the value itself. For example, if the value "10" is disclosed, then "about 10" is also disclosed. It is also understood that each unit between two particular units are also disclosed. For example, if 10 and 15 are disclosed, then 11, 12, 13, and 14 are also disclosed.

As used herein, the terms "about" and "at or about" mean that the amount or value in question can be the designated value, approximately the designated value, or about the same as the designated value. It is generally understood, as used herein, that it is the nominal value indicated ±10% variation unless otherwise indicated or inferred. The term is intended to convey that similar values promote equivalent results or effects recited in the claims. That is, it is understood that amounts, sizes, formulations, parameters, and other quantities and characteristics are not and need not be exact, but can be approximate and/or larger or smaller, as desired, reflecting tolerances, conversion factors, rounding off, measurement error and the like, and other factors known to those of skill in the art. In general, an amount, size, formulation, parameter or other quantity or characteristic is "about" or "approximate" whether or not expressly stated to be such. It is understood that where "about" is used before a quantitative value, the parameter also includes the specific quantitative value itself, unless specifically stated otherwise.

Disclosed are the components to be used to prepare the compositions of the disclosure as well as the compositions themselves to be used within the methods disclosed herein. These and other materials are disclosed herein, and it is understood that when combinations, subsets, interactions, groups, etc. of these materials are disclosed that while specific reference of each various individual and collective combinations and permutation of these compounds cannot be explicitly disclosed, each is specifically contemplated and described herein. For example, if a particular compound is disclosed and discussed and a number of modifications that can be made to a number of molecules including the compounds are discussed, specifically contemplated is each and every combination and permutation of the compound and the modifications that are possible unless specifically indicated to the contrary. Thus, if a class of molecules A, B, and C are disclosed as well as a class of molecules D, E, and F and an example of a combination molecule, A-D is disclosed, then even if each is not individually recited each is individually and collectively contemplated meaning combinations, A-E, A-F, B-D, B-E, B-F, C-D, C-E, and C-F are considered disclosed. Likewise, any subset or combination of these is also disclosed. Thus, for example, the sub-group of A-E, B-F, and C-E would be considered disclosed. This concept applies to all aspects of this application including, but not limited to, steps in methods of making and using the compositions of the disclosure. Thus, if there are a variety of additional steps that can be performed it is understood that each of these additional steps can be performed with any specific aspect or combination of aspects of the methods of the disclosure.

References in the specification and concluding claims to parts by weight of a particular element or component in a composition or article, denotes the weight relationship between the element or component and any other elements or components in the composition or article for which a part by weight is expressed. Thus, in a compound containing 2 parts by weight of component X and 5 parts by weight component Y, X and Y are present at a weight ratio of 2:5, and are present in such ratio regardless of whether additional components are contained in the compound.

A weight percent of a component, unless specifically stated to the contrary, is based on the total weight of the formulation or composition in which the component is included.

As used herein the terms "weight percent," "wt%," and "wt. %," which can be used interchangeably, indicate the percent by weight of a given component based on the total weight of the composition, unless otherwise specified. That is, unless otherwise specified, all wt% values are based on the total weight of the composition. It should be understood that the sum of wt% values for all components in a disclosed composition or formulation are equal to 100.

Unless otherwise stated to the contrary herein, all test standards are the most recent standard in effect at the time of filing this application.

Each of the raw materials used in example and/or comparative compositions described herein are either commercially available and/or the methods for the production thereof are known to those of skill in the art.

It is understood that the compositions disclosed herein have certain functions. Disclosed herein are certain structural requirements for performing the disclosed functions and it is understood that there are a variety of structures that can perform the same function that are related to the disclosed structures, and that these structures will typically achieve the same result.

### Thermoplastic Compositions

Aspects of the disclosure relate to thermoplastic compositions including: (a) from about 20 wt% to about 90 wt% of a polyamide resin; and (b) from about 30 wt% to about 55 wt% of a ceramic filler. The composition has a pencil hardness of "B" or harder as evaluated according to ASTM D3363 using a force of 1 kilogram-force (kgf). The combined weight percent value of all components does not exceed 100 wt%, and all weight percent values are based on the total weight of the composition.

As used herein, "polyamide" refers to a polymer having repeating units linked by amide bonds, and can include aliphatic polyamides (e.g., the various forms of nylon such as nylon 6 (PA6), nylon 66 (PA66), nylon 9 (PA9), nylon 5T, nylon 510, and nylon 610), polyphthalamides (e.g., PPA/high performance polyamide) and aramids (e.g., para-aramid and meta-aramid).

In some aspects the polyamide resin includes a medium chain length polyamide polymer having from 6 to 14 carbon atoms per chain. In particular aspects the polyamide resin/polymer has a carbon to nitrogen ratio of from 5:1 to 10:1. In specific aspects the polyamide resin includes PA5T, PA510, PA610, or a combination thereof. In certain aspects the polyamide resin does not include polyamide 6 (PA6).

The thermoplastic composition includes from about 20 wt% to about 90 wt% of the polyamide resin. In some aspects the composition includes at least 20 wt%, or at least 25 wt%, or at least 30 wt%, or at least 35 wt%, or at least 40 wt%, or at least 45 wt%, or at least 50 wt%, or at least 55 wt%, or at least 60 wt%, or at most 90 wt%, or at most 85 wt%, or at most 80 wt%, or at most 75 wt%, or at most 70 wt%, or at most 65 wt%, or at most 60 wt%, or at most 55 wt%, or at most 50 wt%, or at most 45 wt%, or at most 40 wt%, of the polyamide resin.

The thermoplastic composition includes from about 30 wt% to about 55 wt% of a ceramic filler. Examples of ceramic fillers include, but are not limited to, boron nitride (BN), silicon carbide (SiC), titanium dioxide (TiO₂), aluminum oxide (Al₂O₃) and aluminosilicate (Al₂O₃·SiO₂). In certain aspects the ceramic filler includes aluminum oxide, aluminosilicate, or a combination thereof. In particular aspects the composition includes aluminum oxide and aluminosilicate. In further aspects the ceramic filler includes aluminum oxide and/or aluminosilicate, and titanium dioxide and/or boron nitride.

In some aspects the thermoplastic composition includes at least 30 wt%, or at least 32 wt%, or at least 34 wt%, or at least 36 wt%, or at least 38 wt%, or at least 40 wt%, or at least 42 wt%, or at least 44 wt%, or at least 46 wt%, or at least 48 wt%, or at least 50 wt%, or at most 55 wt%, or at most 53 wt%, or at most 50 wt%, or at most 48 wt%, or at most 45 wt%, or at most 43 wt%, or at most 40 wt%, or at most 38 wt%, or at most 35 wt%, of the ceramic filler.

In specific aspects the composition includes from 30-50 wt% aluminum oxide (Al₂O₃), aluminosilicate (Al₂O₃·SiO₂), or a combination thereof and from about 1 wt% to about 20 wt% titanium dioxide, boron nitride, or a combination thereof. In further aspects the composition includes at least 30 wt%, or at least 32 wt%, or at least 34 wt%, or at least 35 wt%, or at least 36 wt%, or at least 38 wt%, or at least 40 wt%, or at least 42 wt%, or at least 44 wt%, or at least 46 wt%, or at least 48 wt%, or at most 50 wt%, or at most 48 wt%, or at most 45 wt%, or at most 43 wt%, or at most 40 wt%, or at most 38 wt%, or at most 35 wt%, of the aluminum oxide (Al₂O₃), aluminosilicate (Al₂O₃·SiO₂), or a combination thereof. In yet further aspects the composition further includes at least 1 wt%, or at least 2 wt%, or at least 3 wt%, or at least 4 wt%, or at least 5 wt%, or at least 6 wt%, or at least 7 wt%, or at least 8 wt%, or at least 9 wt%, or at least 10 wt%, or at least 11 wt%, or at least 12 wt%, or at least 13 wt%, or at least 14 wt%, or at least 15 wt%, or at most 20 wt%, or at most 19 wt%, or at most 18 wt%, or at most 17 wt%, or at most 16 wt%, or at most 15 wt%, or at most 14 wt%, or at most 13 wt%, or at most 12 wt%, or at most 11 wt%, or at most 10 wt%, or at most 9 wt%, or at most 8 wt%, or at most 7 wt%, or at most 6 wt%, or at most 5 wt%, or at most 4 wt%, or at most 3 wt%, or at most 2 wt%, of the titanium dioxide, boron nitride, or a combination thereof.

The thermoplastic composition may include a glass fiber filler in some aspects. The glass fiber may include round glass fiber, flat glass fiber, or a combination thereof. In further aspects the composition includes from greater than 0 wt% to about 20 wt% of the glass fiber filler. In particular aspects the composition includes at least 0.1 wt%, or at least 0.5 wt%, or at least 1 wt%, or at least 2 wt%, or at least 3 wt%, or at least 4 wt%, or at least 5 wt%, or at least 6 wt%, or at least 7 wt%, or at least 8 wt%, or at least 9 wt%, or at least 10 wt%, or at most 20 wt%, or at most 19 wt%, or at most 18 wt%, or at most 17 wt%, or at most 16 wt%, or at most 15 wt%, or at most 14 wt%, or at most 13 wt%, or at most 12 wt%, or at most 11 wt%, or at most 10 wt%, or at most 9 wt%, or at most 8 wt%, or at most 7 wt%, or at most 6 wt%, or at most 5 wt%, or at most 4 wt%, or at most 3 wt%, or at most 2 wt%, or at most 1 wt%, of the glass fiber filler.

The composition may include at least one additional additive. The at least one additional additive may include, but is not limited to, an impact modifier, pigment, dye, antioxidant, mold release agent, stabilizer, adhesion promoter, lubricant, or a combination thereof.

The composition may include from greater than 0 wt% to 10 wt% of the at least one additional additive. In certain aspects the composition includes at least 0.001 wt%, or at least 0.01 wt%, or at least 0.1 wt%, or at least 0.2 wt%, or at least 0.3 wt%, or at least 0.4 wt%, or at least 0.5 wt%, or at least 0.6 wt%, or at least 0.7 wt%, or at least 0.8 wt%, or at least 0.9 wt%, or at least 1 wt%, or at most 10 wt%, or at most 9 wt%, or at most 8 wt%, or at most 7 wt%, or at most 6 wt%, or at most 5 wt%, or at most 4 wt%, or at most 3 wt%, or at most 2 wt%, or at most 1 wt%, or at most 0.9 wt%, or at most 0.8 wt%, or at most 0.7 wt%, or at most 0.6 wt%, or at most 0.5 wt%, of the at least one additional additive.

Thermoplastic compositions according to aspects of the disclosure have a pencil hardness of "B" or harder as evaluated according to ASTM D3363 using a force of 1 kilogram-force (kgf). In some aspects the composition has a pencil hardness of HB or harder, or F or harder, or H or harder, or 2H or harder, or 3H or harder, as evaluated according to ASTM D3363 using a force of 1 kgf.

In certain aspects the composition has an in-plane thermal conductivity of at least 1.3 watts per meter Kelvin (W/m/K) as evaluated according to ASTM E1461-07. In specific aspects the composition has an in-plane thermal conductivity of at least 1.32 W/m/K, or at least 1.34 W/m/K, or at least 1.36 W/m/K, or at least 1.38 W/m/K, or at least 1.4 W/m/K, or at least 1.42 W/m/K, or at least 1.44 W/m/K, or at least 1.46 W/m/K, or at least 1.48 W/m/K, or at least 1.50 W/m/K, or at least 1.52 W/m/K, or at least 1.54 W/m/K, or at least 1.56 W/m/K, or at most 1.8 W/m/K, or at most 1.75 W/m/K, or at most 1.7 W/m/K, or at most 1.65 W/m/K, or at most 1.6 W/m/K, or at most 1.55 W/m/K , or at most 1.5 W/m/K, as evaluated according to ASTM E1461-07.

In some aspects the composition has a notched Izod impact (NII) strength of at least 3 kilojoules per square meter (kJ/m²) as evaluated according to ISO 180 at 23 °C. In other aspects the composition has a NII strength of at least 3.2 kJ/m², or at least 3.4 kJ/m², or at least 3.6 kJ/m², or at least 3.8 kJ/m², or at least 4 kJ/m², or at least 4.2 kJ/m², or at least 4.4 kJ/m², or at least 4.6 kJ/m², or at least 4.8 kJ/m², or at least 5 kJ/m², or at least 5.2 kJ/m², or at least 5.4 kJ/m², or at least 5.6 kJ/m², or at least 5.8 kJ/m², or at least 6 kJ/m², or at most 15 kJ/m², or at most 12 kJ/m², or at most 10 kJ/m², or at most 9 kJ/m², or at most 8 kJ/m², as evaluated according to ISO 180 at 23 °C.

In particular aspects the composition has a density of 1.8 grams per cubic centimeter (g/cm³) or less as evaluated according to ASTM D792. In specific aspects the composition has a density of 1.79 g/cm³ or less, or 1.78 g/cm³ or less, or 1.77 g/cm³ or less, or 1.76 g/cm³ or less, or 1.75 g/cm³ or less, or 1.74 g/cm³ or less, or 1.73 g/cm³ or less, or 1.72 g/cm³ or less, or 1.71 g/cm³ or less, or 1.7 g/cm³ or less, or 1.69 g/cm³ or less, or 1.68 g/cm³ or less, or 1.67 g/cm³ or less, or 1.66 g/cm³ or less, or 1.65 g/cm³ or less, or 1.64 g/cm³ or less, or 1.63 g/cm³ or less, or 1.62 g/cm³ or less, as evaluated according to ASTM D792.

In some aspects the composition has a water absorption of less than 0.45% as evaluated according to ISO 62-1 at 23 °C for 24 hours. In further aspects the composition has a water absorption of less than 0.40%, or less than 0.35%, or less than 0.30%, or less than 0.25%, or less than 0.2%, or less than 0.15%, as evaluated according to ISO 62-1 at 23 °C for 24 hours.

Compositions according to aspects of the disclosure may have a flexural modulus of at least 2500 megapascals (MPa) as evaluated according to ISO 178 at a test speed of 2.0 millimeters per minute (mm/min). In other aspects the composition has a flexural modulus of at least 3000 MPa, or at least 3500 MPa, or at least 4000 MPa, or at least 4500 MPa, or at least 5000 MPa, or at least 5500 MPa, or at least 6000 MPa, or at least 6500 MPa, or at least 7000 MPa, or at least 7500 MPa, or at most 15000 MPa, or at most 14000 MPa, or at most 13000 MPa, or at most 12000 MPa, or at most 11000 MPa, or at most 10000 MPa, as evaluated according to ISO 178 at a test speed of 2.0 mm/min.

In certain aspects the composition is colorable to yellow, green, blue and pink colors as evaluated according to a CIELAB (L*a*b*) color scale.

### Methods of Manufacture

The one or any foregoing components described herein may be first dry blended with each other, or dry blended with any combination of foregoing components, then fed into an extruder from one or multi-feeders, or separately fed into an extruder from one or multi-feeders. The fillers used in the disclosure may also be first processed into a masterbatch, then fed into an extruder. The components may be fed into the extruder from a throat hopper or any side feeders.

The extruders used in the disclosure may have a single screw, multiple screws, intermeshing co-rotating or counter rotating screws, non-intermeshing co-rotating or counter rotating screws, reciprocating screws, screws with pins, screws with screens, barrels with pins, rolls, rams, helical rotors, co-kneaders, disc-pack processors, various other types of extrusion equipment, or combinations including at least one of the foregoing.

The components may also be mixed together and then melt-blended to form the thermoplastic compositions. The melt blending of the components involves the use of shear force, extensional force, compressive force, ultrasonic energy, electromagnetic energy, thermal energy or combinations including at least one of the foregoing forces or forms of energy.

The barrel temperature on the extruder during compounding can be set at the temperature where at least a portion of the polymer has reached a temperature greater than or equal to about the melting temperature, if the resin is a semi-crystalline organic polymer, or the flow point (e.g., the glass transition temperature) if the resin is an amorphous resin.

The mixture including the foregoing mentioned components may be subject to multiple blending and forming steps if desirable. For example, the thermoplastic composition may first be extruded and formed into pellets. The pellets may then be fed into a molding machine where it may be formed into any desirable shape or product. Alternatively, the thermoplastic composition emanating from a single melt blender may be formed into sheets or strands and subjected to post-extrusion processes such as annealing, uniaxial or biaxial orientation.

The temperature of the melt in the present process may in some aspects be maintained as low as possible in order to avoid excessive thermal degradation of the components. In certain aspects the melt temperature is maintained between about 230°C and about 350°C, although higher temperatures can be used provided that the residence time of the resin in the processing equipment is kept relatively short. In some aspects the melt processed composition exits processing equipment such as an extruder through small exit holes in a die. The resulting strands of molten resin may be cooled by passing the strands through a water bath. The cooled strands can be chopped into pellets for packaging and further handling.

### Articles of Manufacture

In certain aspects, the present disclosure pertains to shaped, formed, or molded articles including the thermoplastic compositions. The thermoplastic compositions can be molded into useful shaped articles by a variety of means such as injection molding, extrusion, rotational molding, compression molding, blow molding and thermoforming to form articles and structural components of, for example, personal or commercial electronics devices, including but not limited to cellular telephones, tablet computers, personal computers, notebook and portable computers, and other such equipment, medical applications, RFID applications, automotive applications, and the like. In a further aspect, the article is extrusion formed. In a still further aspect, the article is injection molded.

In particular aspects the article is a component of a consumer electronics or automotive industry apparatus.

Various combinations of elements of this disclosure are encompassed by this disclosure, e.g., combinations of elements from dependent claims that depend upon the same independent claim.

### Aspects of the Disclosure

In various aspects, the present disclosure pertains to and includes at least the following aspects.

Aspect 1. A thermoplastic composition comprising:
a) from about 20 wt% to about 90 wt% of a polyamide resin; and
b) from about 30 wt% to about 55 wt% of a ceramic filler,
   wherein the composition has a pencil hardness of "B" or harder as evaluated according to ASTM D3363 using a force of 1 kilogram-force (kgf), and
   wherein the combined weight percent value of all components does not exceed 100 wt%, and all weight percent values are based on the total weight of the composition.

Aspect 2. The thermoplastic composition according to Aspect 1, wherein the polyamide resin comprises a carbon to nitrogen ratio of from 5:1 to 10:1.

Aspect 3. The thermoplastic composition according to Aspect 1, wherein the polyamide resin comprises PA5T, PA510, PA610, or a combination thereof.

Aspect 4. The thermoplastic composition according to any one of Aspects 1 to 3, wherein the composition comprises from about 40 wt% to about 60 wt% of the polyamide resin.

Aspect 5. The thermoplastic composition according to any one of Aspects 1 to 4, wherein the composition comprises from about 30 wt% to about 50 wt% of the ceramic filler.

Aspect 6. The thermoplastic composition according to any one of Aspects 1 to 5, wherein the ceramic filler comprises aluminum oxide, aluminosilicate, or a combination thereof.

Aspect 7. The thermoplastic composition according to Aspect 6, wherein the composition comprises aluminum oxide and aluminosilicate.

Aspect 8. The thermoplastic composition according to Aspect 6 or 7, wherein the ceramic filler further comprises titanium dioxide (TiO₂), boron nitride, or a combination thereof.

Aspect 9. The thermoplastic composition according to Aspect 8, wherein the composition comprises from about 1 wt% to about 20 wt% of the titanium dioxide, boron nitride, or a combination thereof.

Aspect 10. The thermoplastic composition according to any one of Aspects 1 to 9, wherein the composition further comprises a glass fiber filler.

Aspect 11. The thermoplastic composition according to Aspect 10, wherein the composition comprises from greater than 0 wt% to about 20 wt% of the glass fiber filler.

Aspect 12. The thermoplastic composition according to any one of Aspects 1 to 11, wherein the composition further comprises at least one additional additive.

Aspect 13. The thermoplastic composition according to Aspect 12, wherein the at least one additional additive comprises an impact modifier, pigment, dye, antioxidant, mold release agent, stabilizer, adhesion promoter, lubricant, or a combination thereof.

Aspect 14. The thermoplastic composition according to Aspect 12 or 13, wherein the composition comprises from greater than 0 wt% to 10 wt% of the at least one additional additive.

Aspect 15. The thermoplastic composition according to any one of Aspects 1 to 14, wherein the composition has an in-plane thermal conductivity of at least 1.3 watts per meter Kelvin (W/m/K) as evaluated according to ASTM E1461-07.

Aspect 16. The thermoplastic composition according to any one of Aspects 1 to 15, wherein the composition has a notched Izod impact (NII) strength of at least 3 kilojoules per square meter (kJ/m²) as evaluated according to ISO 180 at 23 °C.

Aspect 17. The thermoplastic composition according to any one of Aspects 1 to 16, wherein the composition has a density of 1.8 grams per cubic centimeter (g/cm³) or less as evaluated according to ASTM D792.

Aspect 18. The thermoplastic composition according to any one of Aspects 1 to 17, wherein the composition has a water absorption of less than 0.45% as evaluated according to ISO 62-1 at 23 °C for 24 hours.

Aspect 19. The thermoplastic composition according to any one of Aspects 1 to 18, wherein the composition has a flexural modulus of at least 2500 megapascals (MPa) as evaluated according to ISO 178 at a test speed of 2.0 millimeters per minute (mm/min).

Aspect 20. The thermoplastic composition according to any one of Aspects 1 to 19, wherein the composition is colorable to yellow, green, blue and pink colors as evaluated according to a CIELAB (L*a*b*) color scale.

Aspect 21. An article comprising the thermoplastic composition according to any one of Aspects 1 to 20.

Aspect 22. The article according to Aspect 21, wherein the article is a component of a consumer electronics or automotive industry apparatus.

### EXAMPLES

The following examples are put forth so as to provide those of ordinary skill in the art with a complete disclosure and description of how the compounds, compositions, articles, devices and/or methods claimed herein are made and evaluated, and are intended to be purely exemplary and are not intended to limit the disclosure. Efforts have been made to ensure accuracy with respect to numbers (e.g., amounts, temperature, etc.), but some errors and deviations should be accounted for. Unless indicated otherwise, parts are parts by weight, temperature is in °C or is at ambient temperature, and pressure is at or near atmospheric. Unless indicated otherwise, percentages referring to composition are in terms of wt%.

There are numerous variations and combinations of reaction conditions, e.g., component concentrations, desired solvents, solvent mixtures, temperatures, pressures and other reaction ranges and conditions that can be used to optimize the product purity and yield obtained from the described process. Only reasonable and routine experimentation will be required to optimize such process conditions.

Compositions described herein were compounded according to conventional compounding methods; compounding profiles for the compositions described herein are shown in Table 1:

**Table 1 - Compounding Profiles**

| | | **C1, C2, E3-E5, C6** | **C7, C8** | **E9-E11, C12, E13** |
|---|---|---|---|---|
| **Parameters** | **Unit** | **Extrusion Condition** | **Extrusion Condition** | **Extrusion Condition** |
| Compounder Type | NONE | TEM-37BS | TEM-37BS | TEM-37BS |
| Barrel Size | mm | 1500 | 1500 | 1500 |
| Die | mm | 4 | 4 | 4 |
| Zone 1 Temp | °C | 50 | 50 | 50 |
| Zone 2 Temp | °C | 230 | 150 | 150 |
| Zone 3 Temp | °C | 300 | 220 | 240 |
| Zone 4 Temp | °C | 310 | 230 | 260 |
| Zone 5 Temp | °C | 310 | 230 | 270 |
| Zone 6 Temp | °C | 310 | 230 | 280 |
| Zones 7-11 Temp | °C | 300 | 220 | 280 |
| Die Temp | °C | 320 | 230 | 280 |
| Screw speed | rpm | 300 | 300 | 300 |
| Throughput | kg/hr | 30-40 | 30-40 | 30-40 |
| Torque | % | 40-60 | 40-60 | 40-60 |

The compounded compositions were injection molded according to the conditions provided in Table 2:

**Table 2 - Injection Molding Parameters**

| | | **C1, C2, E3-E5, C6** | **C7, C8** | **E9-E11, C12, E13** |
|---|---|---|---|---|
| **Parameters** | **Unit** | **Molding Condition** | **Molding Condition** | **Molding Condition** |
| Pre-drying time | Hour | 4 | 4 | 4 |
| Pre-drying temp | °C | 120 | 120 | 120 |
| Hopper temp | °C | 50 | 50 | 50 |
| Zone 1 temp | °C | 300 | 220 | 260 |
| Zone 2 temp | °C | 310 | 230 | 270 |
| Zone 3 temp | °C | 310 | 230 | 270 |
| Zone 4 temp | °C | 320 | 230 | 280 |
| Nozzle temp | °C | 320 | 235 | 280 |
| Mold temp | °C | 130 | 60 | 120 |
| Screw speed | rpm | 100 | 100 | 100 |
| Back pressure | kgf/cm² | 30 | 30 | 30 |
| Cooling time | s | 20-40 | 20-40 | 20-40 |
| Injection speed | mm/s | 30-150 | 30-150 | 30-150 |
| Holding pressure | kgf/cm² | 600-1000 | 600-1000 | 600-1000 |
| Max. Injection pressure | kgf/cm² | 800-1500 | 800-1500 | 800-1500 |

Compositions described herein included one or more of the components listed in Table 3:

**Table 3 - Components**

| **Component** | **Description** | **Supplier** |
|---|---|---|
| PAST | Poly(pentanediamine-terephthalate) resin, bio-based | Cathay |
| PA6 | Polyamide 6 resin | Hyosung |
| PA510 | Polyamide 510 resin, formed from pentamethylene diamine and sebacic acid | Cathay |
| PA610 | Polyamide 610 resin, copolymer of polyamide 6 and polyamide 10 | Guangyin |
| PA1012 | Polyamide 1012 resin, long-chain, formed from hexamethylene diamine and dodecanedioic acid | Guangyin |
| TiO₂ | Titanium dioxide filler | Chemours |
| Talc | Talc filler, Jetfine^{®} 3CA | Imerys |
| Al₂O₃ | Aluminum oxide filler | Wuxi LongAo |
| Al₂O₃ ·SiO₂ | Aluminosilicate filler, Silatherm^{®} 1466 | HPF |
| BN | Boron nitride filler | Dandong |
| GF | Chopped strand glass fiber filler, ECS10-03-568H | Jushi |
| EC | Ethylene copolymer impact modifier, Fusabond^{™} N493 | Dow |
| A-186 | Silane adhesion promoter, Silquest^{™} A-186 | Momentive |
| AO-1 | Irganox^{®} 1098 stabilizer | BASF |
| AO-2 | Irgafos^{®} 168 stabilizer | BASF |
| Lub | Lubricant | VTC |

Comparative and example compositions were prepared as set forth in Table 4A:

**Table 4A - Comparative and Example Compositions**

| **Component** | **C1** | **C2** | **E3** | **E4** | **E5** |
|---|---|---|---|---|---|
| PAST | 49.3 | 49.3 | 49.3 | 49.3 | 49.3 |
| TiO₂ | 50 | | | | 10 |
| Al₂O₃ | | | 50 | | |
| Al₂O₃·SiO₂ | | | | 50 | 35 |
| Talc | | 40 | | | |
| BN | | 10 | | | 5 |
| AO-1 | 0.2 | 0.2 | 0.2 | 0.2 | 0.2 |
| AO-2 | 0.2 | 0.2 | 0.2 | 0.2 | 0.2 |
| Lub | 0.3 | 0.3 | 0.3 | 0.3 | 0.3 |
| **Total (wt%)** | 100 | 100 | 100 | 100 | 100 |

Properties of the compositions-including the testing standard and conditions for each property evaluation-are provided in Table 4B:

**Table 4B - Properties of Table 4A Compositions**

| **Property** | **Standard** | **Unit** | **C1** | **C2** | **E3** | **E4** | **E5** |
|---|---|---|---|---|---|---|---|
| Thermal Conductivity in-plane | ASTM E1461-07 | W/m/K | 1.23 | 3.04 | 1.59 | 1.49 | 1.62 |
| Thermal Conductivity through-plane | ASTM E1461-07 | W/m/K | 0.55 | 0.98 | 0.78 | 0.76 | 0.75 |
| Pencil Hardness test, 1kgf | ASTM D3363 | - | H | F | 2H | 3H | F |
| Density | ASTM D792 for part | g/cm³ | 1.81 | 1.59 | 1.8 | 1.73 | 1.73 |
| Notched Izod (23 °C) | ISO 180 | kJ/m² | 3.9 | 2.9 | 3.4 | 6.3 | 4.1 |
| Un-notched Izod (23 °C) | ISO 180 | kJ/m² | 19.0 | 19.6 | 18.6 | 39.2 | 28.5 |
| Flex Modulus | ISO 178 2.0 mm/min | MPa | 5557 | 13462 | 7793 | 7436 | 8045 |
| Flex Stress | ISO 178 2.0 mm/min | MPa | 121 | 137 | 144 | 183 | 143 |
| Tensile Modulus | ISO 527 5.0 mm/min | MPa | 5884 | 13667 | 8258 | 7849 | 8529 |
| Tensile Stress | ISO 527 5.0 mm/min | MPa | 69 | 75 | 81 | 102 | 95 |
| Tensile Elongation | ISO 527 5.0 mm/min | % | 1.42 | 0.68 | 1.53 | 1.93 | 1.86 |
| Water absorption (23 °C/24 hours) | ISO 62-1 | % | 0.38 | 0.22 | 0.43 | 0.25 | 0.24 |

The pencil hardness test grades the hardness of the composition from a scale of 6B (softest) to 6H (hardest) according to Table 5:

**Table 5 - ASTM D3363 Pencil Hardness Test Scale**

| | | | | | | | | | | | | | |
|---|---|---|---|---|---|---|---|---|---|---|---|---|---|
| 6B | 5B | 4B | 3B | 2B | B | HB | F | H | 2H | 3H | 4H | 5H | 6H |
| **Softest** | | **→** | | | | | | | | | | **Hardest** | |

The compositions of Table 4A include polyamide PA5T with 50 wt% loading of different fillers. Comparative example C1 included 50 wt% titanium dioxide (TiO₂). It had good overall mechanical performance, good thermal conductivity, and high scratch resistance with a pencil hardness rating of H. Comparative composition C2 included 40 wt% talc and 10 wt% boron nitride as a filler. It had significantly enhanced thermal conductivity but lower impact strength and a lower hardness rating of F. Example composition E3 included 50 wt% aluminum oxide (Al₂O₃) as a filler. It had similar mechanical and thermal properties as comparative composition C1, but with improved scratch resistance. Example composition E4 included 50 wt% aluminosilicate filler (Al₂O₃·SiO₂). Its thermal conductivity, impact strength, scratch resistance, and mechanical strength were all significantly improved compared to composition C1. However, due to the color of the aluminosilicate mineral, the composition appeared as dark yellow, making it relatively challenging to color match with other desired colors. Example composition E5 included a combination of 10 wt% TiO₂, 35 wt% Al₂O₃· SiO₂, and 5 wt% BN as fillers. Its mechanical and impact strength performance was between that of compositions C1 and E4. It had a white color due to the addition of TiO₂, making it easier to color match than example composition E4.

Further example and comparative compositions were prepared as shown in Table 6A:

**Table 6A - Example and Comparative Compositions**

| **Component** | **C6** | **C7** | **C8** | **E9** | **E10** | **E11** | **C12** | **E13** |
|---|---|---|---|---|---|---|---|---|
| PAST | 44.3 | | | | | | | |
| PA6 | | | | | | | 49.3 | |
| PA1012 | | 44.3 | 34.3 | | | | | |
| PA610 | | | | 49.3 | | | | |
| PA510 | | | | | 49.3 | 48.8 | | 49.3 |
| TiO₂ | 50 | 50 | 5 | 10 | 10 | 10 | 10 | 5 |
| Al₂O_{3·}SiO₂ | | | 60 | 35 | 35 | 40 | 40 | 35 |
| BN | | | | 5 | 5 | | | |
| GF | | | | | | | | 10 |
| EC | 5 | 5 | | | | | | |
| A-186 | | | | | | 0.5 | | |
| AO-1 | 0.2 | 0.2 | 0.2 | 0.2 | 0.2 | 0.2 | 0.2 | 0.2 |
| AO-2 | 0.2 | 0.2 | 0.2 | 0.2 | 0.2 | 0.2 | 0.2 | 0.2 |
| Lub | 0.3 | 0.3 | 0.3 | 0.3 | 0.3 | 0.3 | 0.3 | 0.3 |
| **Total (wt%)** | 100 | 100 | 100 | 100 | 100 | 100 | 100 | 100 |

Properties of the compositions are shown in Table 6B; the testing standards and conditions are the same as those provided in Table 4B:

**Table 6B - Properties of Table 6A Compositions**

| **Property** | **Unit** | **C6** | **C7** | **C8** | **E9** | **E10** | **E11** | **C12** | **E13** |
|---|---|---|---|---|---|---|---|---|---|
| Thermal Conductivity in-plane | W/m/K | 1.13 | 1.26 | 1.78 | 1.46 | 1.52 | 1.47 | 1.57 | 1.38 |
| Thermal Conductivity through-plane | W/m/K | 0.64 | 0.59 | 1.15 | 0.86 | 0.80 | 0.75 | 0.89 | 0.75 |
| Pencil Hardness test, 1kgf | - | F | 4B | HB | H | B | F | HB | HB |
| Density | g/cm³ | 1.76 | 1.62 | 1.91 | 1.62 | 1.63 | 1.67 | 1.7 | 1.61 |
| Notched Izod (23 °C) | kJ/m² | 4.0 | 12.8 | 8.4 | 4.0 | 5.9 | 7.0 | 7.5 | 3.7 |
| Un-notched Izod (23 °C) | kJ/m² | 24.3 | 130.9 | 108.5 | 41.9 | 58.2 | 64.8 | 77.9 | 29.4 |
| Flex Modulus | MPa | 4716 | 1787 | 4571 | 5310 | 4384 | 3856 | 4165 | 4948 |
| Flex Stress | MPa | 105 | 52 | 91 | 115 | 105 | 102 | 108 | 139 |
| Tensile Modulus | MPa | 5222 | 2111 | 4428 | 6117 | 4974 | 4471 | 4967 | 6263 |
| Tensile Stress | MPa | 66 | 37 | 57 | 70 | 65 | 66 | 68 | 89 |
| Tensile Elongation | % | 1.76 | 14.24 | 11.18 | 2.83 | 3.93 | 4.98 | 3.88 | 2.81 |
| Water absorption (23 °C/ 24 hours) | % | 0.32 | 0.07 | 0.05 | 0.11 | 0.14 | 0.14 | 0.48 | 0.16 |

The compositions of Table 6A included various types of polyamide as the thermoplastic resin, an ethylene copolymer impact modifier, and combinations of different types and amounts of fillers including aluminum oxide and aluminosilicate. The effect of these different components and amounts on impact strength and ceramic properties was evaluated.

Composition C6 included 5 wt% ethylene copolymer as an impact modifier. As compared to C1, it was seen that unnotched Izod impact strength improved but flexural modulus and stress decreased slightly.

Comparative composition C7 substituted PA1012-a long chain polyamide-for the PA5T polyamide in composition C6. A large improvement in ductility was observed from the increase in impact strength and tensile elongation properties. However, the rigidity of this material was severely compromised, as seen from the reduction in tensile modulus, tensile strength, and pencil hardness.

Composition C8 attempted to increase material strength by increasing filler loading. However, the density increased to 1.91, which is too high for certain applications.

Example compositions E9 and E10 included PA610 and PA510 as the base resins, respectively. These resins have a shorter chain length than PA1012, but more chain flexibility than PA5T. As a result, compositions E9 and E10 have better overall performance as compared to compositions C6 and C7. They are more ductile than composition C6 but more rigid than composition C7.

Compared with composition E10, composition E11 tunes the filler composition-replacing the boron nitride with an equivalent amount of aluminosilicate-and adds a silane adhesion promoter that strengthened the binding between the resin and filler. As a result, impact strength and tensile elongation were further improved as compared to composition E10.

Composition C12 included PA6-one of the mostly commonly used nylonsas the base resin. Although the composition achieves a good balance between ductility and rigidity, its water absorption was too high.

Example composition E13 included glass fiber in the composition. The rigidity of the material was enhanced, as can be seen from the tensile stress and tensile modulus results. However, impact performance was reduced.

The colorability of the example compositions was also evaluated. Example composition E10 was used as the base composition. The amounts of organic pigments and dyes shown in Table 7 (in wt%) were added to this composition in an attempt to achieve yellow, green, blue and pink shades:

**Table 7 - Color Formulations**

| **Color Index** | **Colorant Description** | **Yellow (wt%)** | **Green (wt%)** | **Blue (wt%)** | **Pink (wt%)** |
|---|---|---|---|---|---|
| PY138 | Organic pigment | 0.09 | 0.0132 | | |
| PG7 | Organic pigment | | 0.0072 | 0.008 | |
| PB15:4 | Organic pigment | | | 0.0056 | |
| SR135 | Dye | | | | 0.012 |
| PR202 | Organic pigment | | | | 0.0012 |
| SO60 | Dye | | | | 0.004 |
| PBK7 | Organic pigment | | 0.001 | 0.00048 | |

The color of the samples was evaluated according to the CIELAB (L*a*b*) color space. A visual representation of the results is provided in FIG. 1. From the figure and Table 7 it can be seen that vivid yellow, green, blue and pink ceramic colors could be achieved in the example composition by adding a very small amount (0.09 wt% or less) of a combination of organic pigments and dyes. The colorability of the composition adds aesthetic value to the compositions while maintaining the mechanical properties of the original composition. Such compositions may be particularly suitable for use in appearance part applications in, e.g., the consumer electronics and automotive industries.

The above description is intended to be illustrative, and not restrictive. For example, the above-described examples (or one or more aspects thereof) may be used in combination with each other. Other aspects can be used, such as by one of ordinary skill in the art upon reviewing the above description. The Abstract is provided to comply with 37 C.F.R. §1.72(b), to allow the reader to quickly ascertain the nature of the technical disclosure. It is submitted with the understanding that it will not be used to interpret or limit the scope or meaning of the claims. Also, in the above Detailed Description, various features may be grouped together to streamline the disclosure. This should not be interpreted as intending that an unclaimed disclosed feature is essential to any claim. Rather, inventive subject matter may lie in less than all features of a particular disclosed aspect. Thus, the following claims are hereby incorporated into the Detailed Description as examples or aspects, with each claim standing on its own as a separate aspect, and it is contemplated that such aspects can be combined with each other in various combinations or permutations. The scope of the disclosure should be determined with reference to the appended claims, along with the full scope of equivalents to which such claims are entitled.

## Claims

1. A thermoplastic composition comprising:
a) from about 20 wt% to about 90 wt% of a polyamide resin; and
b) from about 30 wt% to about 55 wt% of a ceramic filler,
wherein the composition has a pencil hardness of "B" or harder as evaluated according to ASTM D3363 using a force of 1 kilogram-force (kgf), and
wherein the combined weight percent value of all components does not exceed 100 wt%, and all weight percent values are based on the total weight of the composition.

2. The thermoplastic composition according to claim 1, wherein the polyamide resin comprises a carbon to nitrogen ratio of from 5:1 to 10:1.

3. The thermoplastic composition according to claim 1, wherein the polyamide resin comprises PA5T, PA510, PA610, or a combination thereof.

4. The thermoplastic composition according to any one of claims 1 to 3, wherein the composition comprises from about 40 wt% to about 60 wt% of the polyamide resin.

5. The thermoplastic composition according to any one of claims 1 to 4, wherein the composition comprises from about 30 wt% to about 50 wt% of the ceramic filler.

6. The thermoplastic composition according to any one of claims 1 to 5, wherein the ceramic filler comprises aluminum oxide, aluminosilicate, or a combination thereof.

7. The thermoplastic composition according to claim 6, wherein the ceramic filler further comprises titanium dioxide (TiO₂).

8. The thermoplastic composition according to any one of claims 1 to 7, wherein the composition further comprises from greater than 0 wt% to about 20 wt% of a glass fiber filler.

9. The thermoplastic composition according to any one of claims 1 to 8, wherein the composition further comprises at least one additional additive comprising an impact modifier, pigment, dye, antioxidant, mold release agent, stabilizer, adhesion promoter, lubricant, or a combination thereof.

10. The thermoplastic composition according to any one of claims 1 to 9, wherein the composition has an in-plane thermal conductivity of at least 1.3 watts per meter Kelvin (W/m/K) as evaluated according to ASTM E1461-07.

11. The thermoplastic composition according to any one of claims 1 to 10, wherein the composition has a notched Izod impact (NII) strength of at least 3 kilojoules per square meter (kJ/m²) as evaluated according to ISO 180 at 23 °C.

12. The thermoplastic composition according to any one of claims 1 to 11, wherein the composition has a density of 1.8 grams per cubic centimeter (g/cm³) or less as evaluated according to ASTM D792.

13. The thermoplastic composition according to any one of claims 1 to 12, wherein the composition has a water absorption of less than 0.45% as evaluated according to ISO 62-1 at 23 °C for 24 hours.

14. The thermoplastic composition according to any one of claims 1 to 13, wherein the composition has a flexural modulus of at least 2500 megapascals (MPa) as evaluated according to ISO 178 at a test speed of 2.0 millimeters per minute (mm/min).

15. An article comprising the thermoplastic composition according to any one of claims 1 to 14, wherein the article is a component of a consumer electronics or automotive industry apparatus.
